# EUROPEAN PATENT APPLICATION

(11) **EP 4 625 192 A1**
(43) Date of publication of application: **01.10.2025**
(21) Application number: 25159409.9
(22) Date of filing: 21.02.2025
(51) Int. Cl.: G06F 13/28, G06F 12/1009

(54) **SYSTEM ARCHITECTURE AND TECHNIQUES FOR PINNED MEMORY MIGRATION**

(30) Priority: 30.03.2024 US 202418622908
(71) Applicant: INTEL Corporation, Santa Clara, CA 95054 (US)
(72) Inventor: Kakaiya, Utkarsh Y., Folsom CA, 95630 (US); Sankaran, Rajesh M., Portland OR, 97229 (US); Attarde, Sumedh S., San Jose CA, 95136 (US); Lantz, Philip R., Cornelius OR, 97113 (US); Anderson, Andrew V., Forest Grove OR, 97116 (US); Kumar, Sanjay K., hil, 97124 (US)
(74) Representative: Samson & Partner Patentanwälte mbB

(57) **Abstract**

Methods and apparatus relating to a system architecture and techniques for pinned memory migration are described. In an embodiment, one or more memory devices store a source page and a destination page. Logic circuitry causes a write operation from an Input/Output (I/O) device to be observed for both the source page and the destination page. A transactional memory copy operation is to be performed from the source page to the destination page. Other embodiments are also disclosed and claimed.

## Description

### FIELD OF THE INVENTION

The present disclosure generally relates to the field of memory. More particularly, some embodiments relate to a system architecture and techniques for pinned memory migration.

### BACKGROUND OF THE INVENTION

In some implementations, memory pages that are used for Input/Output ("I/O" or "IO") purposes may be pinned (e.g., by system software), making these pinned memory pages immovable for the duration of pinning. This pinning may ensure data correctness, for example, in situations where there could be in-flight accesses to these memory pages.

### BRIEF DESCRIPTION OF DRAWINGS

The detailed description is provided with reference to the accompanying figures. In the figures, the left-most digit(s) of a reference number identifies the figure in which the reference number first appears. The use of the same reference numbers in different figures indicates similar or identical items.
FIG. 1 illustrates a block diagram of a system architecture according to an embodiment.
FIG. 2 illustrates a block diagram of some components of a control interface for the PMM agent of FIG. 1, according to an embodiment.
FIG. 3 illustrates a block diagram of components used to perform a Dualcast operation, according to an embodiment.
FIG. 4 illustrates a flow diagram of a method to provide pinned memory migration, according to an embodiment.
FIG. 5 illustrates an example computing system.
FIG. 6 illustrates a block diagram of an example processor and/or System on a Chip (SoC) that may have one or more cores and an integrated memory controller.
FIG. 7(A) is a block diagram illustrating both an example in-order pipeline and an example register renaming, out-of-order issue/execution pipeline according to examples.
FIG. 7(B) is a block diagram illustrating both an example in-order architecture core and an example register renaming, out-of-order issue/execution architecture core to be included in a processor according to examples.
FIG. 8 illustrates examples of execution unit(s) circuitry.

### DETAILED DESCRIPTION OF THE INVENTION

In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware (such as logic circuitry or more generally circuitry or circuit), software, firmware, or some combination thereof.

As mentioned above, memory page pinning may ensure data correctness, for example, in situations where there could be in-flight accesses to the pinned memory pages. In some implementations, Direct Memory Access (DMA) operations may be paused. However, pausing DMA operations may cause I/O fabric back-pressure that blocks or delays DMA requests, causes system-wide timeouts, etc.

To this end, some embodiments provide a system architecture and/or techniques for pinned memory migration. In an embodiment, one or more pinned memory pages may be migrated or moved while there may be on-going accesses to these pinned memory pages from I/O device(s). Not being able to move pinned memory pages may impact many cloud, edge, and client systems. Hence, some embodiments enable migration of pinned pages to allow for improved operations, such as memory off-lining for Reliability, Availability, and Serviceability (RAS), power consumption reduction, memory tiering, memory defragmentation, memory pooling, etc.

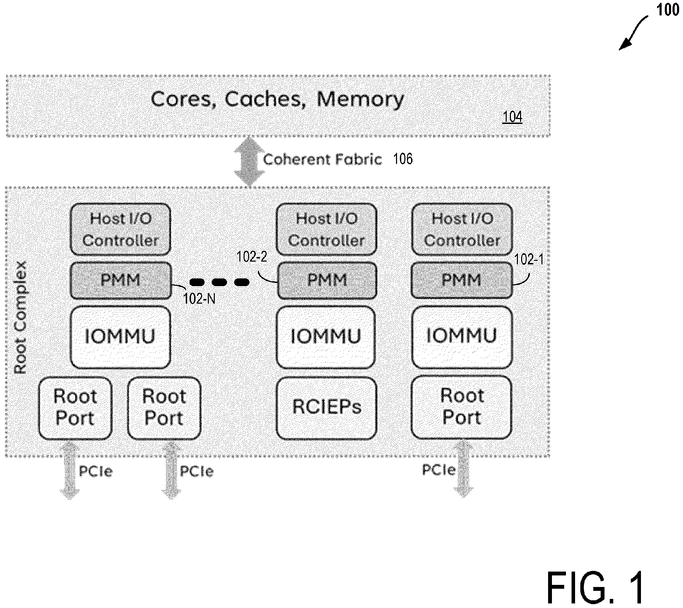

In at least one embodiment, a new system architecture enables migration of pinned pages by: (1) system software (e.g., Operating System (OS), Virtual Machine Manager (VMM), etc.) communicates the address of source and destination pages associated with the migration to Pinned Memory Migration (PMM) logic (e.g., logic circuitry); (2) PMM logic ensures that write operations from I/O devices are observed not only in the source page/region but are also observed in the destination page/region by generating a new "Dualcast" operation to the destination page/region; and (3) system software performs a "Transactional Memory Copy" to ensure consistency of data between the source and destination pages/regions to support any in-flight DMA operations. In an embodiment, the PMM logic may be provided on an integrated circuit device (such as a System on Chip ("SOC" or "SoC"), such as discussed with reference to FIGs. 1 et seq.

Current DMA pausing techniques may involve various operations that can reduce efficiency and/or speed. For example, to effect a DMA pause: (1) DMA operations to a source page may be paused; (2) the source page may then be unmapped from an IO Memory Management Unit (IOMMU) and any IO Translation Lookaside Buffers (IOTLBs) synchronized; (3) the source page may then be copied to a destination page; (4) the destination page may then be mapped in IOMMU page-table(s); and (5) the DMA operation unpaused. Such a DMA pausing operation may be functionally fragile. For example, a DMA operation may need to be paused for a non-trivial duration (e.g., including unmapping a memory page, followed with invalidation of IOTLBs, copying the memory page, and mapping the memory page). As a result, pausing DMA operations may cause I/O fabric back-pressure which in turn blocks or delays DMA requests behind the I/O fabric. As an example, upstream completions ordered behind paused DMA write operations can then trigger timeouts for the Central Processing Unit (CPU) (e.g., when a driver issues a Memory Mapped IO (MMIO) read operation).

Furthermore, since most I/O devices are not page-fault capable, they generally require system software (e.g., Operating System (OS), Virtual Machine Manager (VMM), etc.) to pin the memory pages that are DMA targets. On a sample system, this may be accomplished by invoking an OS Application Programming Interface (API) to pin the memory pages associated with an I/O buffer before the I/O device accesses them, and by invoking an OS API to unpin the memory pages associated with an I/O buffer once the I/O device has no need to access them. On a virtualized system, since the VMM does not have visibility into which pages are DMA targets vs. which pages are not, the VMM may end up pinning the full memory of the Virtual Machine (VM) when the VM has direct-assigned I/O devices (e.g., Peripheral Component Interconnect express (PCIe) Physical Function (PF) passthrough, PCIe Single Root I/O Virtualization (SR-IOV) Virtual Function (VF) passthrough, Scalable I/O Virtualization (SIOV) device-interface assignment to the VM). Hence, the implication of pinning pages is that these pages cannot be migrated (moved) from one memory location to another memory location, which impacts many cloud/edge/client scenarios.

### For example in:

- Memory Off-lining (Scenario # 1): VMM may keep a counter of the number of Correctable Machine Check Interrupt (CMCI) for memory pages and would migrate the pages to a different location in memory when the correctable machine check counter reaches a particular threshold. However, VMM may not do this today for VMs with the assigned devices, as the VM could be using the page-in-question for I/O purposes (e.g., the page observing CMCI is pinned).
- Memory Off-lining (Scenario # 2): system software may migrate pages from different memory modules to a particular memory module to be able to bring down the rest of the memory modules to a low-power state (e.g., in client/Personal Computer (PC) for battery-life retention) or to replace the faulty Dual Inline Memory Modules (DIMMs) (e.g., in server systems). System software may not do this today as the page(s) could be pinned for DMA.
- Memory Tiering: Considering a server system where the memory capacity is composed of two memory tiers: performant (near) memory and capacity (far) memory. Capacity (far) memory can be just Compute Express Link (CXL) attached memory or hardware-managed two-level memory (e.g., Flat two Level Memory (2LM)). VM may be provisioned with some near and some far memory capacity. For improved performance, VMM would use hot/cold page tracking information to promote hot (more frequently accessed) pages to near memory or demote cold (less frequently accessed) pages to far memory. For VMs with direct-assigned devices, VMM may not accomplish this as the page(s) being promoted/demoted could be pinned for DMA.
- Memory Defragmentation (Scenario # 1): Considering a scenario where the GPU hardware only supports 64 Kilo Byte (KB) pages whereas the CPU hardware supports 4KB, 2MB and 1 Giga Byte (GB) pages. Based on the request from a graphics subsystem, OS would find a 2MB page to store Graphics Processing Unite (GPU) allocations. However, the OS may not find a contiguous block of 64KB/2MB chunk without defragmenting the memory (e.g., moving different 4KB pages to one location to open up a physically contiguous chunk of 64KB/2MB memory). OS may not do this today, if one or more of these pages that are to be moved are pinned for DMA.
- Memory Defragmentation (Scenario # 2): Considering a scenario where OS would promote multiple 4KB pages to one 2MB page, or promote multiple 2MB pages to one 1GB page for performance reasons (e.g., 7.5% performance improvement across cloud workloads in a study when the pages are promoted). OS may not do this today, if the page(s) to be promoted are pinned for DMA (e.g., as 73% of unmovable memory in these cloud workloads may be attributed to network I/O).
- Memory Defragmentation (Scenario # 3): Some Cloud Service Providers (CSPs) may use different page sizes for different VM types (e.g., 1GB pages for larger VMs, 2MB pages smaller VMs, mixer of 1GB & 2MB pages, 4KB pages for VM Containers, 2MB or 4KB pages for Confidential VMs, etc.). This results in memory fragmentation at the system-level as VMs are started, stopped, or migrated. VMM may aim to defragment memory to help with the bin packing problem for new VMs or to improve performance of existing VMs. However, as the pages assigned to VMs are pinned, the VMM's ability to defragment memory may be very limited.
- Memory Pooling: CXL 3.0 introduces the support for a CXL Dynamic Memory Capacity (DCD) device, e.g., considering a scenario where CXL DCD device is attached to multiple hosts and there is a request to detach a region of CXL DCD memory from one host and attach it to a different host. Today, system software may not allow the memory to be removed from the host if there are pinned pages in the region to be removed.

To this end, at least one embodiment provides a system architecture that enables migration of pinned pages by: (1) system software (e.g., Operating System (OS), Virtual Machine Manager (VMM), etc.) communicates the address of source and destination pages associated with the migration to Pinned Memory Migration (PMM) logic (e.g., logic circuitry); (2) PMM logic ensures that write operations from I/O devices are observed not only in the source page/region but are also observed in the destination page/region by generating a new "Dualcast" operation to the destination page/region; and (3) system software performs a "Transactional Memory Copy" to ensure consistency of data between the source and destination pages/regions to support any in-flight DMA operations. In an embodiment, the PMM logic may be provided on an integrated circuit device (such as a System on Chip ("SOC" or "SoC"), such as discussed with reference to FIGs. 1 et seq.

FIG. 1 illustrates a block diagram of a system architecture 100 according to an embodiment. The components of system architecture 100 may be provided on an integrated circuit device such as an SoC. As shown, PMM agent(s) 102-1 to 102-N (which may be implemented as logic including hardware) reside post the IO Memory Management Unit (IOMMU) translation in a path from an I/O device to memory 104. As shown, a coherent fabric 106 couples the cores, caches, and memory 104 to other components of the system (e.g., one or more host I/O controller(s)). In one embodiment, the PMM agent(s) are implemented in hardware and in other embodiments the PMM agent is implemented via a combination of hardware and firmware and/or software. Each PMM agent may include three interfaces: (1) Control Interface - which is used to configure the PMM address ranges; (2) DMA Request Interface - which is used for receiving the DMA Requests; and (3) Memory Transaction Interface - which is used for generating Memory Transactions associated with the DMA requests. As illustrated, the IOMMUs in turn communicate with PCIe devices via one or more root ports and Root Complex Integrated Endpoints (RCIEPs).

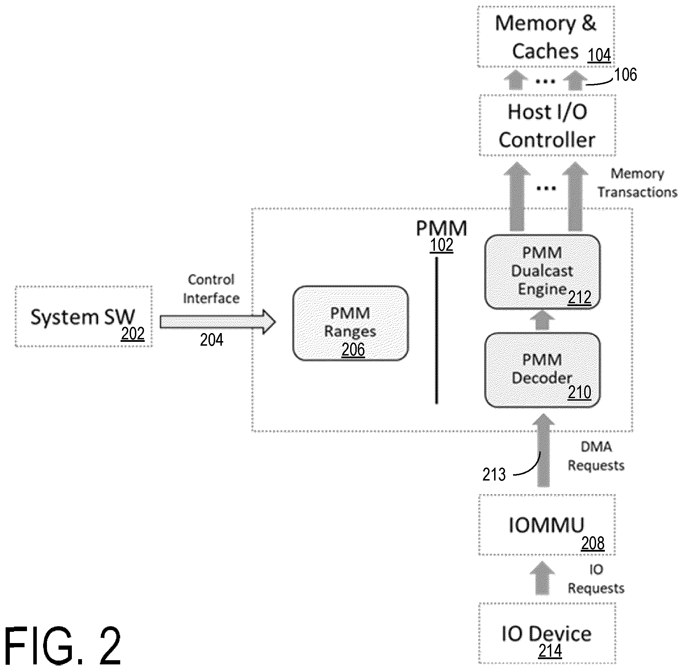

FIG. 2 illustrates a block diagram of some components of a control interface for the PMM agent of FIG. 1, according to an embodiment. Initially, it is noted that some components of the system architecture 100 are omitted to merely simplify the discussion.

System software 202 utilizes the PMM Control Interface 204 to program PMM ranges in a device 206. The PMM ranges correspond to the source and destination memory regions associated with the memory being migrated. In one embodiment, the PMM Control Interface 204 utilizes a set of registers (implemented via the device 206) where the system software programs the source and destination memory ranges associated with the migration (see, e.g., below discussion for register details with reference to tables 2 and 3): (1) a set of registers (e.g., a Match Address Register) that store address and size associated with the source region along with a "valid" bit to indicate if the values in the register are valid or not; (2) a set of registers (e.g., an Alternate Address Register) that store address(es) associated with the corresponding destination region along with a "valid" bit to indicate if the values in the register are valid or not; (3) a capability register (e.g., a Dualcast Unit Capabilities Register) that enumerates capabilities of the PMM agent along with the offsets/locations of source/destination registers/regions.

In one embodiment, after programming the PMM range(s) a drain operation is performed to drain in-flight DMA requests to ensure that the newly programmed PMM range(s) take effect. In one embodiment, a drain operation is performed implicitly by the PMM agent when the PMM range(s) are programmed. In another embodiment, system software 202 queues an invalidation wait descriptor to the IOMMU 208 to drain the in-flight DMAs.

In an embodiment, the memory location for PMM registers is reported to system software 202 using a newly defined "Dualcast Unit Reporting Structure" through an Advanced Control and Power Interface (ACPI) DMA Remapping (DMAR) reporting table (see, e.g., Table 1 below).

**Table 1**

| Field | Byte Length | Byte Offset | Description |
|---|---|---|---|
| Type | 2 | 0 | 7 - Dualcast Unit Reporting Structure |
| Length | 2 | 2 | Length of this structure: 16 + size of device scope structures |
| Flags | 1 | 4 | TBD (All bits are currently reserved.) |
| Size | 1 | 5 | Bits 3:0: Indicates the number of 4 KB pages containing the hardware register set for this Dualcast Unit. If the value in this field is N, the number of pages is 2^{N}. |
| | | | Bits 7:4: Reserved. |
| Segment Number | 2 | 6 | PCI Segment associated with this Dualcast Unit. |
| Dualcast Unit Base Address | 8 | 8 | Base Address of the Dualcast Unit registers. |
| | | | Bits 63:52: Reserved. |
| | | | Bits 51:12: 4 KB-aligned address of the page containing the Dualcast Unit Capabilities register. |
| | | | Bits 11:0: Offset within the 4 KB page of the Dualcast Unit Capabilities register. The Dualcast Unit Capabilities register is 16-byte aligned, thus bits 3:0 of this field are 0. |
| | | | Note, the Dualcast Unit Capabilities register contains offsets of the other Dualcast Unit registers. |
| Device Scope | - | 16 | List of devices or bridges controlled by this Dualcast Unit. The following device scope entry types are allowed: |
| | | | 0x01: PCI Endpoint Device |
| | | | 0x02: PCI Subhierarchy |
| | | | 0x05: ACPI Namespace Device |

In one embodiment, the PMM registers could be segregated into two sets: trusted registers and untrusted registers, where the trusted registers are accessible only by the trusted software entity (e.g., Trusted Domain Extensions (TDX) module), whereas untrusted registers are accessible by the untrusted software entity (e.g., OS, VMM, etc.). In one embodiment, trusted registers are protected from the untrusted access using the SEAM SAI (Security Attribute of Initiator) policy group.

In one embodiment, Match Address Register and Alternate Address Register associated with a PMM range are located at least 64B apart from each other for system software 202 to efficiently program/de-program them using the Streaming (Direct-Store) Writes (e.g., Memory Mapped IO (MMIO) write using a MOVDIRI instruction). This is to avoid serialization performed by CPU cores when the writes fall within a 64B cacheline. In an embodiment, the PMM Range is valid/active only when the "Valid" bit is Set (e.g., 0x1) in both the Match Address Register and the Alternate Address Register, and the PMM range is not valid/active when at least one of the "Valid" bits is Clear (e.g., 0x0). In at least one embodiment, a set of Match Address Registers are co-located, and a set of Alternate Address Registers are co-located to allow the system software 202 to efficiently program/de-program more than one register using larger writes (e.g., MMIO write using MOVDIR64B).

In another embodiment, the PMM Control Interface is implemented as a work-queue (or a set of work-queues) based interface where the system software 202 queues work-descriptors to program PMM ranges associated with the source and destination memory regions. In one embodiment, the work-descriptor contains the source region address, destination region address, size, and other region-related attributes. In an embodiment, the work-descriptor is a batch descriptor or contains a list of region information. In one embodiment, separate work-queues are used by the trusted software entity (e.g., TDX-module) and by the untrusted software entity (e.g., OS, VMM, etc.). In one embodiment, the work-queue storage is inside of the PMM agent (or otherwise implemented on the same integrated circuit device) and in another embodiment the work-queue storage is in system memory. In one embodiment, the work-descriptors are written to work-queue using the enqueue command(s) ENQCMD/ENQCMDS instructions, and in other embodiment the work-descriptors are written the work-queue using the MOVDIR64B instruction. In a different embodiment, new ISA instructions may be introduced for CPU Core(s) to program PMM ranges in the PMM agent.

Referring to FIG. 2, the PMM agent 102 also includes a PMM decoder logic 210 and a PMM Dualcast engine/logic 212. When receiving a DMA Request over a DMA Request Interface 213 from IOMMU 208, the PMM decoder 210 checks if a received DMA request falls within one of the PMM "Source" ranges (206) or not. It accomplishes this by comparing an address (e.g., Host Physical Address (HPA)) received in the DMA request against a source memory region address and a size programmed in PMM ranges 206 (i.e., whether the HPA is within [Source Region Address, Source Region Address + Region Size] or not) to see if there is a match.

The DMA (Write/Read/Atomic Operation) request could be a result of:
- IOMMU 208 receiving an I/O request (e.g., an untranslated request, an Address Translation Services (ATS) translation request, ATS translated request, etc.) from the I/O device 214; for example: a Memory Read Request, a Memory Write Request, an Unordered IO (UIO) Read Request, a UIO Write Request, and/or a Deferred Memory Write (DMWr) Request.
- Requests from IOMMU 208 to read, write, or atomically update memory; for example: a Memory Read Request for IOMMU structures (e.g., Root-Table, Context-Table, Scalable-Mode Root-Table, Scalable-Mode Context-Table, Scalable-Mode Process Address Space Identifier (PASID) Directory, Scalable-Mode PASID Table, Interrupt Remapping Table, Invalidation Queue, Page Request Queue, Status Write for Invalidation Wait, and/or virtual IOMMU Structures), a Memory Write Request for IOMMU Structures (e.g., Page Request Queue, Status Write for Invalidation Wait, and/or virtual IOMMU Structures), a Memory Read Request for Paging Structures (e.g., First-Stage Paging Structures, Second-Stage Paging Structures, and/or HPT Table), an Atomic Operation ("AtomicOp") for Access/Dirty bits in Paging Structures, and/or an Atomic Operation for a Posted Interrupt Descriptor (PID).

In one embodiment, the PMM Decoder 210 performs this decoding only for the DMA Requests that modify a source memory region (e.g., a DMA Write Request or a DMA AtomicOp Request), but skips the check for DMA Requests that just read the source memory region (e.g., a DMA Read Request).

Referring to FIG. 2, the PMM Dualcast engine/logic 212 causes the generation of additional memory transaction(s) to ensure that the pinned memory page(s) (i.e., page(s) that could be the target of DMA operation(s)) can be migrated successfully. Hence, the PMM Dualcast engine 212 ensures that any relevant DMA updates are observed in both the source and destination memory region(s)/page(s) when the migration is in progress.

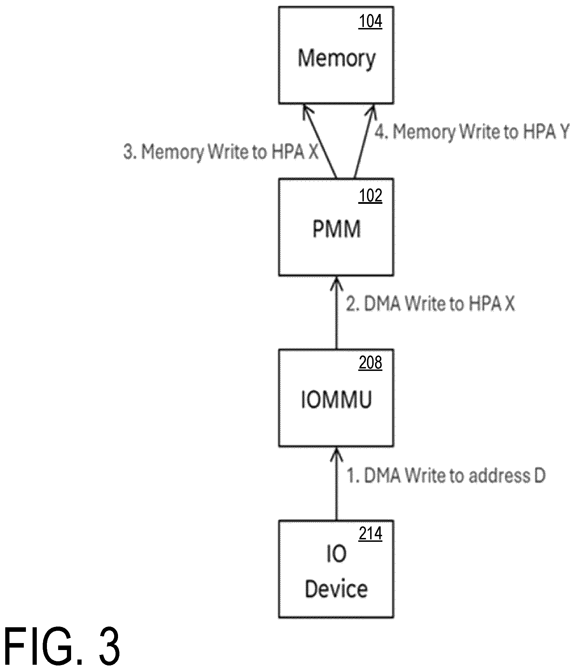

More particularly, FIG. 3 illustrates a block diagram of components used to perform a Dualcast operation, according to an embodiment. It is noted that some components of FIGs. 1 and/or 2 are omitted from FIG. 3 to merely simplify the discussion.

Referring to FIGs. 1 to 3, to accomplish the Dualcast operation for DMA Write Requests, the PMM Dualcast Engine 212 (of the PMM logic 102) performs Writes to both the Source memory region and the Destination memory region (i.e., performs a Dualcast). PMM Dualcast Engine 212 ensures that write operations to the destination memory region are strongly ordered behind the write operations to the source memory region. As discussed herein, "strongly ordered behind the write operations" generally indicates that the data from a first write operation is guaranteed to be visible to other agents in the system no later than the data from a second, subsequent write operation becomes visible. PMM Dualcast Engine 212 determines the Source Address based on the address received on the DMA Request and the Destination Address is derived based on the Destination Region Address stored in the matching PMM Range 206 found based on this Source Address.

Considering a scenario where system software aims to migrate a page at HPA X to a new page at HPA Y, HPA X is mapped to DMA address D in IOMMU (where D may be a Guest Physical Address (GPA), Guest I/O Virtual Address (GIOVA), or Guest Virtual Address (GVA) with virtualization usages or I/O Virtual Address (IOVA) with bare-metal OS usages), and DMA write arrives from the I/O device. PMM agent will perform a Dualcast as shown in FIG. 3 to both HPA X and HPA Y. In an embodiment, the write operations in the last four paragraphs (paragraphs 00041 to 00044) may be directed to cache.

Moreover, on a PMM Range match found for DMA Read Requests, PMM Dualcast Engine 212 does not perform any Dualcast, rather it performs a Read to the Source memory region per the original DMA Read Request. On a PMM Range match found for DMA Atomic Operation Requests, PMM Dualcast Engine 212 performs an Atomic Operation at the Source memory region, and then performs a Write to the Destination memory region with the resulting value. On a PMM Range match found for DMA UIO Write Requests, PMM Dualcast Engine 212 performs Writes to both the Source and Destination memory regions and returns UIO Write Completion to the I/O device when both Writes are observed (e.g., achieved a G-O (Globally-Observability)). In one embodiment, UIO Write Completion is returned to the I/O device as soon as the Write is observed for the Source memory region.

Additionally, on a PMM Range match found for DMA UIO Read Requests, PMM Dualcast Engine 212 does not perform any Dualcast operation, rather it performs a Read to the Source memory region per the original DMA Read Request. On a PMM Range match found for DMWr Requests, PMM Dualcast Engine 212 performs Writes to both Source and Destination memory regions and returns DMWr Completion to the I/O device when both Writes are observed (e.g., achieved a G-O). In one embodiment, DMWr Completion is returned to the I/O device as soon as the Write is observed for the Source memory region.

According to some embodiments, a few scenarios are provided below to illustrate sample operations of the PMM agent 102. In the below illustration, use of ")" indicates that the recited range includes addresses up to but not including the address immediately preceding the ")". For example, "[A, A+1000)" means that the range includes addresses from A up to but not including address A+1000.
- System software has programmed the following PMM Ranges:
   o PMM Range # 0: [A, A+1000), [B, B+1000)
   o PMM Range # 1: [X, X+1000), [Y, Y+1000)
   o PMM Range # 2: [M, M+3000), [O, O+3000)
- DMA Write Example # 1
   o DMA Request arrives to IOMMU with Address D which gets translated to HPA X
   o PMM Decoder finds a match of HPA X against the PMM Range # 1
   o PMM Dualcast Engine performs a Write to both HPA X and HPA Y
- DMA Write Example # 2
   o DMA Request arrives to IOMMU with Address E which gets translated to HPA M+1064
   o PMM Decoder finds a match of HPA M+1064 against the PMM Range # 2
   o PMM Dualcast Engine performs a Write to both HPA M+1064 and HPA O+1064
- DMA Write Example # 3
   o DMA Request arrives to IOMMU with Address G which gets translated to HPA N
   o PMM Decoder doesn't find a match with any valid (Enabled) PMM Ranges
   o PMM Dualcast Engine performs a Write to only HPA N
- DMA Read Example
   o DMA Request arrives to IOMMU with Address D which gets translated to HPA X
   o PMM Decoder skips the PMM Range checks
   o PMM Dualcast Engine performs a Read to only HPA X
- DMA AtomicOp Example
   o DMA Request arrives to IOMMU with Address D which gets translated to HPA X
   o PMM Decoder finds a match of HPA X against the PMM Range # 1
   o PMM Dualcast Engine performs AtomicOp on HPA X and performs a write to HPA Y with the resulting value after AtomicOp

According to some embodiments, tables 2 and 3 below, respectively, show sample register definitions for the PMM control interface and the Dualcast unit capabilities.

**Table 2**

| Field | Byte Length | Description |
|---|---|---|
| Dualcast Unit Capabilities | 8 | See details below. |
| | | The offset of this register is given by bits 11:0 of the Dualcast Unit Base Address field in the DMAR Dualcast Unit Reporting Structure. |
| Match Address | 8 | Address range to match against write transactions. |
| | | Bits 63:52: Reserved. |
| | | Bits 51:12: 4 KB-aligned base address of the range to match. This field may include key ID bits. |
| | | Bits 11:7: Reserved. |
| | | Bits 6:1: Size of the range to match. If the value in this field is N, the size of the range is 2^{N} bytes. |
| | | If N is less than 12, the behavior is undefined. |
| | | Bit 0: Valid. |
| | | When Valid is 0, this Match Range is not used. |
| | | The remaining fields are ignored. |
| | | When Valid is 1 in both the Match Address and Alternate Address fields, supported memory transactions that fall within the physical address |
| | | range specified by the Match Address Base and Size are replicated to the same offset within the physical address range starting at Alternate Address. |
| | | When Valid is 1, the address and size fields are locked. |
| | | When Valid is 0, the address and size fields may be programmed and Valid may be set to 1 using a single write operation. |
| | | Valid is cleared by reset. The values of the remaining fields after reset is undefined. |
| | | The offset of OS Range Match Address[n] relative to the Capabilities register is: |
| | | 16 × (OS Ranges Offset) + n × Stride |
| | | The offset of TDX Range Match Address[n] is: |
| | | 16 × (TDX Ranges Offset) + n × Stride |
| | | In both cases, Stride is 2^{(Range Register Stride + 3)}. |
| Alternate Address | 8 | Alternate address |
| | | The offset is the Range Register Stride times the number of ranges supported (either Number of OS Ranges or Number of TDX Ranges), with a minimum offset of 64 if there are fewer than 8 ranges. |
| | | Bits 63:52: Reserved. |
| | | Bits 51:12: 4 KB-aligned base address of the alternate physical address range. This field may include key ID bits. |
| | | Bits 11:1: Reserved. |
| | | Bit 0: Valid. |
| | | When Valid is 0, this Match Range is not used. |
| | | The remaining fields are ignored. The Match |
| | | Range is enabled only when Valid is 1 in both the Match Address and Alternate Address fields. |
| | | When Valid is 1, the address field is locked. |
| | | When Valid is 0, the address field may be programmed and Valid may be set to 1 using a single write operation. |
| | | Valid is cleared by reset. The values of the remaining fields after reset is undefined. |
| | | The offset of OS Range Alternate Address[n] relative to the Capabilities register is: |
| | | 16 × (OS Ranges Offset) |
| | | + max[Number of OS Ranges × Stride, 64] |
| | | + n × Stride |
| | | The offset of TDX Range Alternate Address[n] is: |
| | | 16 × (TDX Ranges Offset) |
| | | + max[Number of TDX Ranges × Stride, 64] |
| | | + n × Stride |
| | | Stride is 2^{(Range Register Stride + 3)}. |

**Table 3**

| Field | Bits | Size | Description |
|---|---|---|---|
| Version | 7:0 | 8 bits | Version. Must be 10h for register sets matching this specification. |
| OS Ranges Support | 8 | 1 bit | Indicates support for Match Ranges for OS use. |
| | | | If this field is 0, the OS Ranges Offset and Number of OS Ranges fields should be ignored. |
| TDX Ranges Support | 9 | 1 bit | Indicates support for Match Ranges for TDX use. If this field is 0, the TDX Ranges Offset and Number of TDX Ranges fields should be ignored. |
| MemWr Support | 10 | 1 bit | Indicates whether replication is supported for MemWr transactions. |
| UIOWr Support | 11 | 1 bit | Indicates whether replication is supported for UIOWr transactions. |
| AtomicOp Support | 12 | 1 bit | Indicates whether replication is supported for AtomicOp transactions. |
| DMWr Support | 13 | 1 bit | Indicates whether replication is supported for DMWr transactions. |
| Reserved | 19:14 | 6 bits | Reserved. |
| Range Register Stride | 23:20 | 4 bits | Distance from each Match Range register to the next. The stride is 2^{N+3} bytes, where N is the value in this field. If this field is 0, the Match Range registers are contiguous. |
| OS Ranges Offset | 35:24 | 12 bits | Offset of the base of the Match Range registers for OS use, relative to the address of this capability register. The offset is 16 × N, where N is the value in this field. |
| Number of OS Ranges | 43:36 | 8 bits | Number of Match Ranges for OS use. |
| TDX Ranges Offset | 55:44 | 12 bits | Offset of the base of the Match Range registers for TDX use, relative to the address of this capability register. The offset is 16 × N, where N is the value in this field. |
| Number of TDX Ranges | 63:56 | 8 bits | Number of Match Ranges for TDX use. |

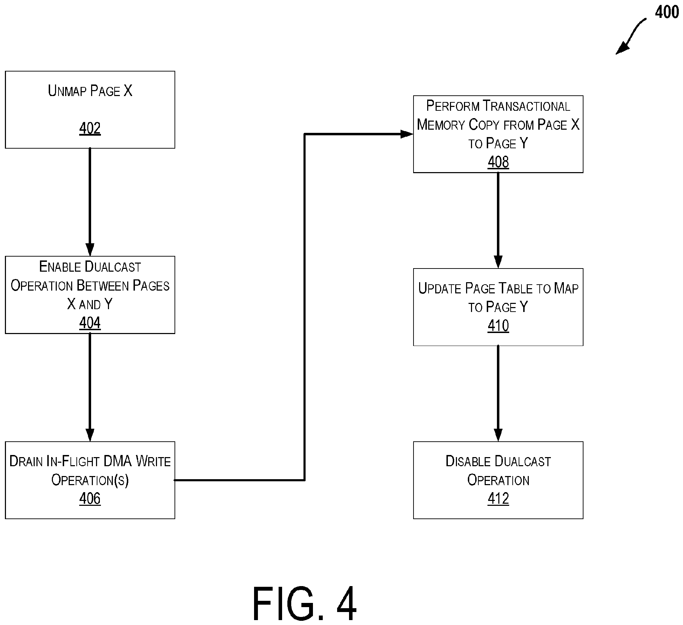

FIG. 4 illustrates a flow diagram of a method 400 to provide pinned memory migration, according to an embodiment. The method 400 is directed at migration of a memory page at HPA X to a new page at HPA Y, where HPA X is mapped to a DMA address D in IOMMU 208 (e.g., D may be GPA/GIOVA/GVA with virtualization usages or IOVA with bare-metal OS usages). In various embodiments, the operations of method 400 may be performed by system software (or other software e.g., not software that is part of the PMM agent 102).

Referring to FIGS. 1-4, at an operation 402, software unmaps page X for CPU accesses (other than those accesses used for the transactional memory copy operation) and invalidates CPU Translation Lookaside Buffers (TLBs), while page X continues to be mapped for I/O at DMA address D. In one embodiment, the mappings removed include Extended Page Table (EPT) mappings used to control accesses from within a VM. In an embodiment the mappings removed include user-mode mappings used by an application.

At an operation 404, software enables a Dualcast operation between pages X and Y by programming a PMM range 206 in the PMM agent 102. PMM agent replicates all DMA writes to page X also to page Y. In at least one embodiment, write operations to page Y (i.e., the destination page) are guaranteed to be strongly ordered behind writes to page X (i.e., the source page).

At an operation 406, software causes draining of any in-flight DMA writes that may be already queued to memory ahead of Dualcast enable at operation 404. From this point onwards, all new DMA writes to X are guaranteed to be replicated to Y. The drain operation may be initiated implicitly by the PMM agent when the PMM range 206 is programmed or initiated by system software queueing an IOMMU invalidation wait descriptor (e.g., inv_wait_dsc).

At an operation 408, software causes performance of a 'Transactional Memory Copy' from page X to page Y. As discussed herein, a "transactional memory" operation generally refers to a memory operation that allows load and store operations to execute atomically. For example, if the transactional memory copy detects a change to page X while copying from page X to page Y, it retries the copy operation. The transactional memory copy operation may be done in any chunk size (e.g., 64B, ..., 512B, 1KB, etc.). Generally, the larger the chunk size, the higher chance for DMA write conflict during chunk copy may be present.

At an operation 410, the memory page table is updated to map IOMMU 208 (and CPU accesses) to page Y and invalidate IOTLBs. At an operation 412, software disables the Dualcast operation between page X and page Y, e.g., by de-programming a PMM range 206 in the PMM agent.

Furthermore, when a page is being migrated from a source memory location X to a destination memory location Y by the system software (e.g., at operation 408, there are scenarios where a DMA write may modify the source page X while it is being migrated to page Y. Transactional Memory Copy helps the system software in detecting the hazard in data correctness and redoes the copy operation.

As an example, consider the following scenarios with in-flight DMA memory writes and page migration copy:
Case # 1: MemWr(X) -> DcastWr (Y) -> COPY(X,Y)
Case # 2: COPY(X, Y) -> MemWr(X) -> DcastWr(Y)
Case # 3: MemWr(X) -> COPY(X,Y) -> DcastWr(Y)
Case # 4: MemWr(X)/DcastWr(Y) interleaved within COPY(X,Y)

Cases 1, 2, and 3 above are safe, whereas case 4 has an exposed hazard (namely, COPY reads old-value from X -> MemWr updates X -> PMM updates Y -> COPY write overwrites Y with old-value of X). In this case, Transactional Copy is used to detect the hazard and redoes the copy operation with the updated value of X.

In various embodiments, different techniques may be used to perform the Transactional Memory Copy. In the first embodiment, system software utilizes the Transactional Memory Instruction Set Architecture (ISA) in CPU cores to perform the Transactional Memory Copy operation. For example, XBEGIN; READ (X); WRITE (Y); XEND. In the second embodiment, system software utilizes the CPU cores to perform the Transactional Memory Copy. For example, READ(X); WRITE (Y); COMPARE (X,Y). In the third embodiment, system software offloads the memory copy to an accelerator (such as Data Streaming Accelerator^{™} (DSA^{™}), provided by Intel Corporation of Santa Clara, California). For example, system software issues a memory copy MEMCPY(X,Y) work-descriptor to an accelerator, followed by the memory compare MEMCMP(X,Y) work-descriptor, or system software issues a memory copy with Cyclic Redundancy Code (CRC) MEMCPYWITHCRC(X,Y) work-descriptor to an accelerator, followed by a check CRC CHECKCRC(X) work-descriptor.

Table 4 below illustrates sample approaches for performing a transactional memory copy operation in accordance with some embodiments. It is noted that the recitation of DSA in Table 4 is for illustrative purposes and any "offload accelerator may be utilized in approach 4.

**Table 4**

| | Approach | Logic | Notes |
|---|---|---|---|
| 1 | Using Transactional Memory ISA | XBEGIN; READ (X); WRITE (Y); XEND | • 1 Read, 1 Write |
| | | | • Currently only on P-cores |
| 2. | Using CPU memory compare after copy | READ(X); WRITE (Y); COMPARE (X,Y) | • 3 Read, 1 Write |
| | | | • Extra 2 reads from cache |
| 3. | Using DSA memory compare after copy | MEMCPY(X,Y); MEMCMP(X,Y) | • 3 Read**,** 1 Write |
| | | | • Offloaded |
| 4. | Using DSA CRC compare after copy | MEMCPYWITHCRC(X,Y); CHECKCRC(X) | • 2 Read, 1 Write |
| | | | • Offloaded |

In one embodiment, the Transactional Copy is performed in smaller chunk sizes to detect hazard more quickly and effect re-do of the copy. For example, the following pseudocode may be utilized:

```
TRANSACTIONAL_MEMORY_COPY
 {
 FOR_EACH_CHUNK_OF_N_BYTES_IN_A_PAGE
 {
 RETRY:
      READ(X); WRITE(Y);
      IF (COMPARE(X, Y) == SAME)
            X = X + N; Y = Y + N;
      ELSE
            GOTO RETRY;
 } }
```

### SEPARATE IO AND CPU READ/WRITE PERMISSIONS

Furthermore, many scenarios today require system software to share page tables between a CPU MMU and IOMMU, which limits the ability to remove memory access for CPU cores while keeping the memory access for I/O devices. In some embodiments, the following extensions are introduced to the paging structure entries and IOMMU hardware to support separate I/O and CPU R/W permissions:
- Define Bit 62 of Second-Stage Paging Structure Entries as an I/O Write (IW) field. For example, Bit 62 of Second-Stage PML5 Table Entry, Second-Stage Page Map Level 4 (PMLA4) Table Entry, Second-Stage Page Directory Pointer Table Entry, Second-Stage Page Directory Entry, and Second-Stage Page Table Entry
- Define Bit 61 of Second-Stage Paging Structure Entries as an I/O Read (IR) field. For example, Bit 61 of Second-Stage PML5 Table Entry, Second-Stage PML4 Table Entry, Second-Stage Page Directory Pointer Table Entry, Second-Stage Page Directory Entry, and Second-Stage Page Table Entry
- Define Bit 57 in IOMMU's Extended Capability Register as Second-Stage I/O Read/Write Support (SSIRWS) to enumerate support for this feature
   o When 0, IOMMU hardware does not support I/O Read and I/O Write bits in second-stage paging entries
   ∘ When 1, IOMMU hardware supports I/O Read and I/O Write bits in second-stage paging entries
- Define Bit 7 in IOMMU's Root Table Address Register as Second-Stage I/O Read/Write Enable (SSIRWE) to control enabling/disable of separate I/O Read/Write Permissions
   ∘ When 0, IOMMU hardware uses bit 0 (R) and bit 1 (W) in second-stage paging entries to calculate effective permissions for memory access.
   ∘ When 1, IOMMU hardware uses bit 61 (IR) and bit 62 (IW) in second-stage paging entries to calculate effective permissions for memory access.
The value of this field may take effect only after software executes a Set Root Table Pointer command.

In one embodiment, when migrating a page from X to Y, system software programs all the PMM agents on the platform. In a second embodiment, system software will only program PMM agents that may expect in-flight DMAs for the source page being migrated. For example, consider a scenario where there are five PMM agents on the platform, but the I/O devices assigned to VM are in the scope of only the first two PMM agents, then the system software only programs PMM ranges in the first two PMM agents.

In one embodiment, system software first uses Move Doubleword as Direct Store (MOVDIRI) instructions to set up PMM ranges in all (or some) PMM agents, preforms a Store Fence (SFENCE) operation, writes invalidation descriptor in all (or some) IOMMU's, and uses MOVDIRI instructions to update the tail pointers associated with the invalidation queues to force a drain of in-flight DMAs. The drain operation is then followed by an SFENCE, and a wait for all the invalidations to complete. This approach is envisioned to allow for more parallelism to the system software, so it does not have to spend as much time waiting for MMIO write operation(s) to complete before moving on. This may be especially important in an SoC where there may be many PMM agents or IOMMUs.

Additionally, some embodiments may be applied in computing systems that include one or more processors (e.g., where the one or more processors may include one or more processor cores), such as those discussed with reference to FIGs. 1 et seq., including for example a desktop computer, a workstation, a computer server, a server blade, or a mobile computing device. The mobile computing device may include a smartphone, tablet, UMPC (Ultra-Mobile Personal Computer), laptop computer, Ultrabook^{™} computing device, wearable devices (such as a smart watch, smart ring, smart bracelet, or smart glasses), etc.

### EXAMPLE COMPUTER ARCHITECTURES

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

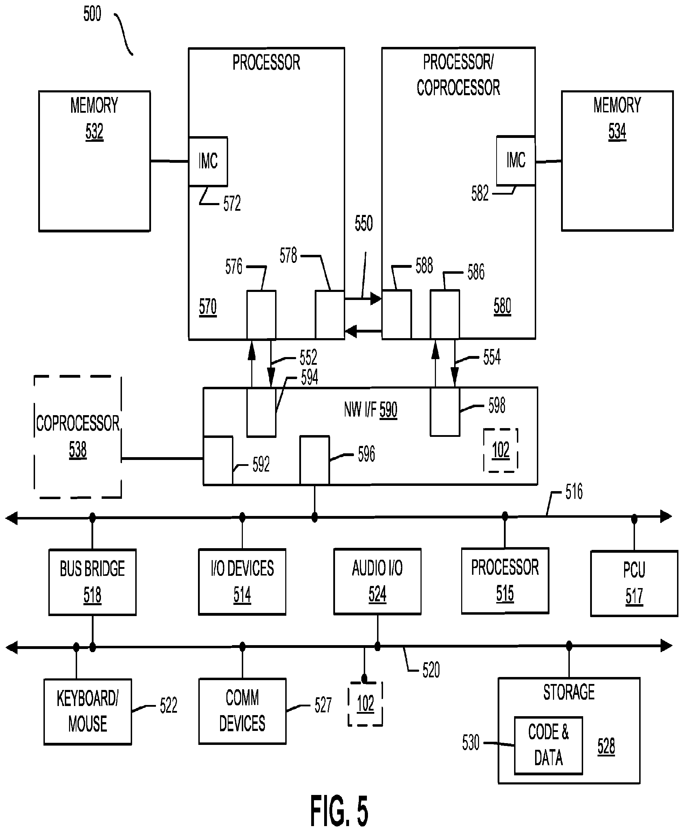

FIG. 5 illustrates an example computing system. Multiprocessor system 500 is an interfaced system and includes a plurality of processors or cores including a first processor 570 and a second processor 580 coupled via an interface 550 such as a point-to-point (P-P) interconnect, a fabric, and/or bus. In some examples, the first processor 570 and the second processor 580 are homogeneous. In some examples, first processor 570 and the second processor 580 are heterogenous. Though the example system 500 is shown to have two processors, the system may have three or more processors, or may be a single processor system. In some examples, the computing system is a system on a chip (SoC).

Processors 570 and 580 are shown including integrated memory controller (IMC) circuitry 572 and 582, respectively. Processor 570 also includes interface circuits 576 and 578; similarly, second processor 580 includes interface circuits 586 and 588. Processors 570, 580 may exchange information via the interface 550 using interface circuits 578, 588. IMCs 572 and 582 couple the processors 570, 580 to respective memories, namely a memory 532 and a memory 534, which may be portions of main memory locally attached to the respective processors.

Processors 570, 580 may each exchange information with a network interface (NW I/F) 590 via individual interfaces 552, 554 using interface circuits 576, 594, 586, 598. The network interface 590 (e.g., one or more of an interconnect, bus, and/or fabric, and in some examples is a chipset) may optionally exchange information with a coprocessor 538 via an interface circuit 592. In some examples, the coprocessor 538 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 570, 580 or outside of both processors, yet connected with the processors via an interface such as P-P interconnect, such that either or both processors' local cache information may be stored in the shared cache if a processor is placed into a low power mode.

Network interface 590 may be coupled to a first interface 516 via interface circuit 596. In some examples, first interface 516 may be an interface such as a Peripheral Component Interconnect (PCI) interconnect, a PCI Express interconnect or another I/O interconnect. In some examples, first interface 516 is coupled to a power control unit (PCU) 517, which may include circuitry, software, and/or firmware to perform power management operations with regard to the processors 570, 580 and/or co-processor 538. PCU 517 provides control information to a voltage regulator (not shown) to cause the voltage regulator to generate the appropriate regulated voltage. PCU 517 also provides control information to control the operating voltage generated. In various examples, PCU 517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 517 is illustrated as being present as logic separate from the processor 570 and/or processor 580. In other cases, PCU 517 may execute on a given one or more of cores (not shown) of processor 570 or 580. In some cases, PCU 517 may be implemented as a microcontroller (dedicated or general-purpose) or other control logic configured to execute its own dedicated power management code, sometimes referred to as P-code. In yet other examples, power management operations to be performed by PCU 517 may be implemented externally to a processor, such as by way of a separate power management integrated circuit (PMIC) or another component external to the processor. In yet other examples, power management operations to be performed by PCU 517 may be implemented within BIOS or other system software.

Various I/O devices 514 may be coupled to first interface 516, along with a bus bridge 518 which couples first interface 516 to a second interface 520. In some examples, one or more additional processor(s) 515, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 516. In some examples, second interface 520 may be a low pin count (LPC) interface. Various devices may be coupled to second interface 520 including, for example, a keyboard and/or mouse 522, communication devices 527 and storage circuitry 528. Storage circuitry 528 may be one or more non-transitory machine-readable storage media as described below, such as a disk drive or other mass storage device which may include instructions/code and data 530 and may implement the storage 'ISAB03 in some examples. Further, an audio I/O 524 may be coupled to second interface 520. Note that other architectures than the point-to-point architecture described above are possible. For example, instead of the point-to-point architecture, a system such as multiprocessor system 500 may implement a multi-drop interface or other such architecture.

### EXAMPLE CORE ARCHITECTURES, PROCESSORS, AND COMPUTER ARCHITECTURES.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

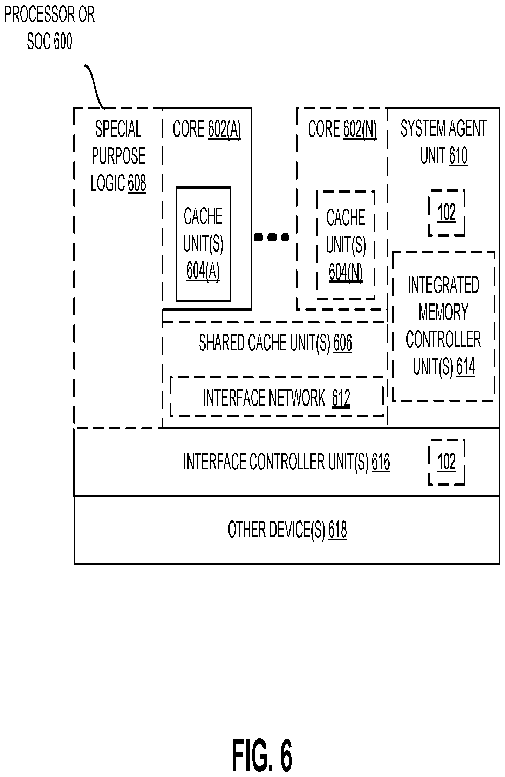

FIG. 6 illustrates a block diagram of an example processor and/or SoC 600 that may have one or more cores and an integrated memory controller. The solid lined boxes illustrate a processor 600 with a single core 602(A), system agent unit circuitry 610, and a set of one or more interface controller unit(s) circuitry 616, while the optional addition of the dashed lined boxes illustrates an alternative processor 600 with multiple cores 602(A)-(N), a set of one or more integrated memory controller unit(s) circuitry 614 in the system agent unit circuitry 610, and special purpose logic 608, as well as a set of one or more interface controller units circuitry 616. Note that the processor 600 may be one of the processors 570 or 580, or co-processor 538 or 515 of FIG. 5.

Thus, different implementations of the processor 600 may include: 1) a CPU with the special purpose logic 608 being integrated graphics and/or scientific (throughput) logic (which may include one or more cores, not shown), and the cores 602(A)-(N) being one or more general purpose cores (e.g., general purpose in-order cores, general purpose out-of-order cores, or a combination of the two); 2) a coprocessor with the cores 602(A)-(N) being a large number of special purpose cores intended primarily for graphics and/or scientific (throughput); and 3) a coprocessor with the cores 602(A)-(N) being a large number of general purpose in-order cores. Thus, the processor 600 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 604(A)-(N) within the cores 602(A)-(N), a set of one or more shared cache unit(s) circuitry 606, and external memory (not shown) coupled to the set of integrated memory controller unit(s) circuitry 614. The set of one or more shared cache unit(s) circuitry 606 may include one or more mid-level caches, such as level 2 (L2), level 3 (L3), level 4 (L4), or other levels of cache, such as a last level cache (LLC), and/or combinations thereof. While in some examples interface network circuitry 612 (e.g., a ring interconnect) interfaces the special purpose logic 608 (e.g., integrated graphics logic), the set of shared cache unit(s) circuitry 606, and the system agent unit circuitry 610, alternative examples use any number of well-known techniques for interfacing such units. In some examples, coherency is maintained between one or more of the shared cache unit(s) circuitry 606 and cores 602(A)-(N). In some examples, interface controller units circuitry 616 couple the cores 602 to one or more other devices 618 such as one or more I/O devices, storage, one or more communication devices (e.g., wireless networking, wired networking, etc.), etc.

In some examples, one or more of the cores 602(A)-(N) are capable of multi-threading. The system agent unit circuitry 610 includes those components coordinating and operating cores 602(A)-(N). The system agent unit circuitry 610 may include, for example, power control unit (PCU) circuitry and/or display unit circuitry (not shown). The PCU may be or may include logic and components needed for regulating the power state of the cores 602(A)-(N) and/or the special purpose logic 608 (e.g., integrated graphics logic). The display unit circuitry is for driving one or more externally connected displays.

The cores 602(A)-(N) may be homogenous in terms of instruction set architecture (ISA). Alternatively, the cores 602(A)-(N) may be heterogeneous in terms of ISA; that is, a subset of the cores 602(A)-(N) may be capable of executing an ISA, while other cores may be capable of executing only a subset of that ISA or another ISA.

### EXAMPLE CORE ARCHITECTURES - IN-ORDER AND OUT-OF-ORDER CORE BLOCK DIAGRAM

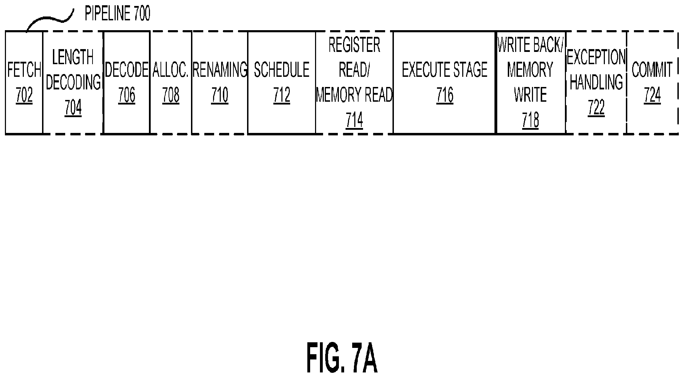

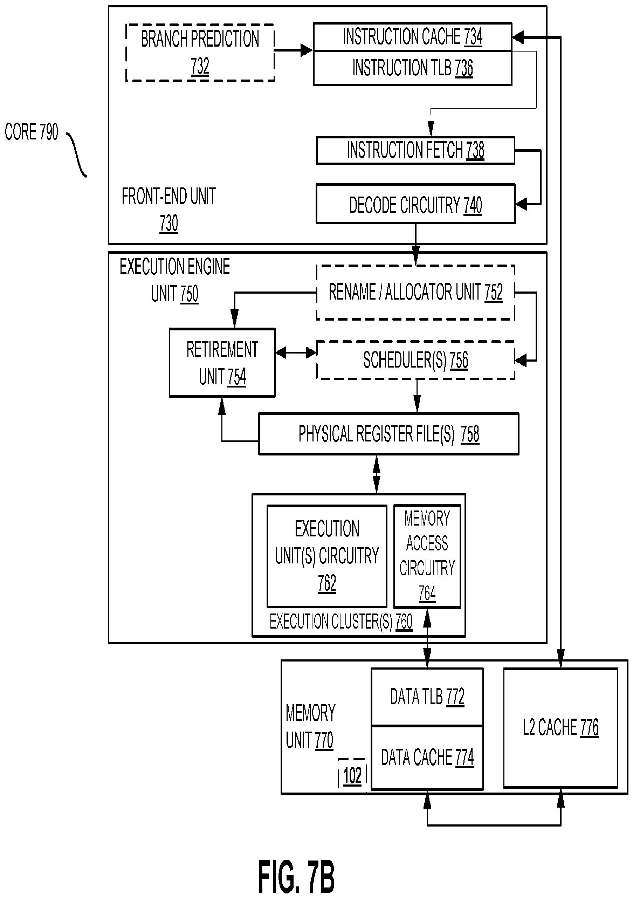

FIG. 7(A) is a block diagram illustrating both an example in-order pipeline and an example register renaming, out-of-order issue/execution pipeline according to examples. FIG. 7(B) is a block diagram illustrating both an example in-order architecture core and an example register renaming, out-of-order issue/execution architecture core to be included in a processor according to examples. The solid lined boxes in FIGS. 7(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 7(A), a processor pipeline 700 includes a fetch stage 702, an optional length decoding stage 704, a decode stage 706, an optional allocation (Alloc) stage 708, an optional renaming stage 710, a schedule (also known as a dispatch or issue) stage 712, an optional register read/memory read stage 714, an execute stage 716, a write back/memory write stage 718, an optional exception handling stage 722, and an optional commit stage 724. One or more operations can be performed in each of these processor pipeline stages. For example, during the fetch stage 702, one or more instructions are fetched from instruction memory, and during the decode stage 706, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 706 and the register read/memory read stage 714 may be combined into one pipeline stage. In one example, during the execute stage 716, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 7(B) may implement the pipeline 700 as follows: 1) the instruction fetch circuitry 738 performs the fetch and length decoding stages 702 and 704; 2) the decode circuitry 740 performs the decode stage 706; 3) the rename/allocator unit circuitry 752 performs the allocation stage 708 and renaming stage 710; 4) the scheduler(s) circuitry 756 performs the schedule stage 712; 5) the physical register file(s) circuitry 758 and the memory unit circuitry 770 perform the register read/memory read stage 714; the execution cluster(s) 760 perform the execute stage 716; 6) the memory unit circuitry 770 and the physical register file(s) circuitry 758 perform the write back/memory write stage 718; 7) various circuitry may be involved in the exception handling stage 722; and 8) the retirement unit circuitry 754 and the physical register file(s) circuitry 758 perform the commit stage 724.

FIG. 7(B) shows a processor core 790 including front-end unit circuitry 730 coupled to execution engine unit circuitry 750, and both are coupled to memory unit circuitry 770. The core 790 may be a reduced instruction set architecture computing (RISC) core, a complex instruction set architecture computing (CISC) core, a very long instruction word (VLIW) core, or a hybrid or alternative core type. As yet another option, the core 790 may be a special-purpose core, such as, for example, a network or communication core, compression engine, coprocessor core, general purpose computing graphics processing unit (GPGPU) core, graphics core, or the like.

The front-end unit circuitry 730 may include branch prediction circuitry 732 coupled to instruction cache circuitry 734, which is coupled to an instruction translation lookaside buffer (TLB) 736, which is coupled to instruction fetch circuitry 738, which is coupled to decode circuitry 740. In one example, the instruction cache circuitry 734 is included in the memory unit circuitry 770 rather than the front-end circuitry 730. The decode circuitry 740 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 740 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 740 may be implemented using various different mechanisms. Examples of suitable mechanisms include, but are not limited to, look-up tables, hardware implementations, programmable logic arrays (PLAs), microcode read only memories (ROMs), etc. In one example, the core 790 includes a microcode ROM (not shown) or other medium that stores microcode for certain macroinstructions (e.g., in decode circuitry 740 or otherwise within the front-end circuitry 730). In one example, the decode circuitry 740 includes a micro-operation (micro-op) or operation cache (not shown) to hold/cache decoded operations, micro-tags, or micro-operations generated during the decode or other stages of the processor pipeline 700. The decode circuitry 740 may be coupled to rename/allocator unit circuitry 752 in the execution engine circuitry 750.

The execution engine circuitry 750 includes the rename/allocator unit circuitry 752 coupled to retirement unit circuitry 754 and a set of one or more scheduler(s) circuitry 756. The scheduler(s) circuitry 756 represents any number of different schedulers, including reservations stations, central instruction window, etc. **In** some examples, the scheduler(s) circuitry 756 can include arithmetic logic unit (ALU) scheduler/scheduling circuitry, ALU queues, address generation unit (AGU) scheduler/scheduling circuitry, AGU queues, etc. The scheduler(s) circuitry 756 is coupled to the physical register file(s) circuitry 758. Each of the physical register file(s) circuitry 758 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 758 includes vector registers unit circuitry, writemask registers unit circuitry, and scalar register unit circuitry. These register units may provide architectural vector registers, vector mask registers, general-purpose registers, etc. The physical register file(s) circuitry 758 is coupled to the retirement unit circuitry 754 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 754 and the physical register file(s) circuitry 758 are coupled to the execution cluster(s) 760. The execution cluster(s) 760 includes a set of one or more execution unit(s) circuitry 762 and a set of one or more memory access circuitry 764. The execution unit(s) circuitry 762 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 756, physical register file(s) circuitry 758, and execution cluster(s) 760 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 764). It should also be understood that where separate pipelines are used, one or more of these pipelines may be out-of-order issue/execution and the rest in-order.

In some examples, the execution engine unit circuitry 750 may perform load store unit (LSU) address/data pipelining to an Advanced Microcontroller Bus (AMB) interface (not shown), and address phase and writeback, data phase load, store, and branches.

The set of memory access circuitry 764 is coupled to the memory unit circuitry 770, which includes data TLB circuitry 772 coupled to data cache circuitry 774 coupled to level 2 (L2) cache circuitry 776. In one example, the memory access circuitry 764 may include load unit circuitry, store address unit circuitry, and store data unit circuitry, each of which is coupled to the data TLB circuitry 772 in the memory unit circuitry 770. The instruction cache circuitry 734 is further coupled to the level 2 (L2) cache circuitry 776 in the memory unit circuitry 770. In one example, the instruction cache 734 and the data cache 774 are combined into a single instruction and data cache (not shown) in L2 cache circuitry 776, level 3 (L3) cache circuitry (not shown), and/or main memory. The L2 cache circuitry 776 is coupled to one or more other levels of cache and eventually to a main memory.

The core 790 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 790 includes logic to support a packed data instruction set architecture extension (e.g., AVX1, AVX2), thereby allowing the operations used by many multimedia applications to be performed using packed data.

### EXAMPLE EXECUTION UNIT(S) CIRCUITRY

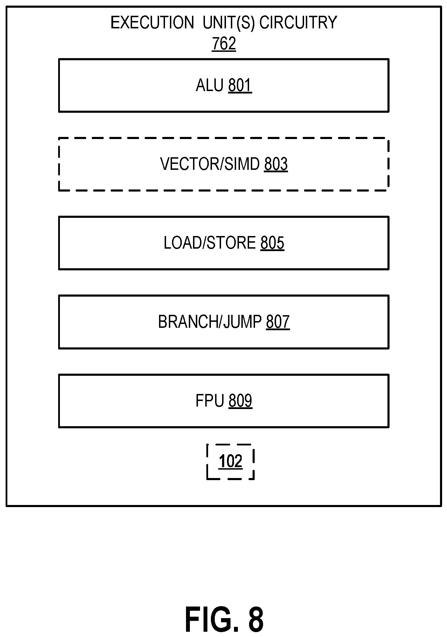

FIG. 8 illustrates examples of execution unit(s) circuitry, such as execution unit(s) circuitry 762 of FIG. 7(B). As illustrated, execution unit(s) circuity 762 may include one or more ALU circuits 801, optional vector/single instruction multiple data (SIMD) circuits 803, load/store circuits 805, branch/jump circuits 807, and/or Floating-point unit (FPU) circuits 809. ALU circuits 801 perform integer arithmetic and/or Boolean operations. Vector/SIMD circuits 803 perform vector/SIMD operations on packed data (such as SIMD/vector registers). Load/store circuits 805 execute load and store instructions to load data from memory into registers or store from registers to memory. Load/store circuits 805 may also generate addresses. Branch/jump circuits 807 cause a branch or jump to a memory address depending on the instruction. FPU circuits 809 perform floating-point arithmetic. The width of the execution unit(s) circuitry 762 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

In this description, numerous specific details are set forth to provide a more thorough understanding. However, it will be apparent to one of skill in the art that the embodiments described herein may be practiced without one or more of these specific details. In other instances, well-known features have not been described to avoid obscuring the details of the present embodiments.

The following examples pertain to further embodiments. Example 1 includes an apparatus comprising: one or more memory devices to store a source page and a destination page; and logic circuitry to cause a write operation from an Input/Output (I/O) device to be observed for both the source page and the destination page, wherein a transactional memory copy operation is to be performed from the source page to the destination page.

Example 2 includes the apparatus of example 1, wherein the logic circuitry is to cause replication of all write operations to the source page to the destination page to observe the write operation from the I/O device. Example 3 includes the apparatus of any one of examples 1 to 2, wherein, to observe the write operation from the I/O device, the logic circuitry is to cause: replication of all write operations to the source page to the destination page; and drainage of all in-flight write operations that have been queued for access to the one or more memory devices prior to commencement of the replication. Example 4 includes the apparatus of any one of examples 1 to 3, wherein, to observe the write operation from the I/O device, the logic circuitry is to cause an update to a Pinned Memory Migration (PMM) range to enable replication of all write operations to the source page to the destination page. Example 5 includes the apparatus of any one of examples 1 to 4, wherein the write operation comprises a Direct Memory Access (DMA) write memory operation.

Example 6 includes the apparatus of any one of examples 1 to 5, wherein the logic circuitry is to cause replication of all write operations to the source page to the destination page to observe the write operation from the I/O device, wherein any write operation to the destination page is to be ordered behind any write operation to the source page. Example 7 includes the apparatus of any one of examples 1 to 6, wherein the transactional memory copy operation is to be repeated in response to a determination that data in the source page has changed during the transactional memory copy operation. Example 8 includes the apparatus of any one of examples 1 to 7, wherein the source page is to be unmapped for processor accesses, other than those accesses used for the transactional memory copy operation, prior to causing the performance of the transactional memory copy operation. Example 9 includes the apparatus of any one of examples 1 to 8, wherein the source page is to be unmapped for accesses by a processor, other than those accesses used for the transactional memory copy operation, and invalidate the source page in all Translation Lookaside Buffers (TLBs) of the processor prior to causing the performance of the transactional memory copy operation. Example 10 includes the apparatus of any one of examples 1 to 9, wherein a memory page table is to be updated to map future accesses by a processor to the destination page after performance of the transactional memory copy operation.

Example 11 includes the apparatus of any one of examples 1 to 10, wherein the logic circuitry is to communicate with the memory through a host I/O controller. Example 12 includes the apparatus of any one of examples 1 to 11, wherein the host I/O controller is coupled to the memory via a coherent fabric. Example 13 includes the apparatus of any one of examples 1 to 12, wherein a System on Chip (SoC) comprises the one or more memory devices, the logic circuitry, and a processor having one or more processor cores. Example 14 includes the apparatus of any one of examples 1 to 13, wherein the transactional memory copy operation is to be offloaded to an accelerator. Example 15 includes the apparatus of any one of examples 1 to 14, wherein the accelerator comprises a Data Streaming Accelerator (DSA).

Example 16. One or more non-transitory computer-readable media comprising one or more instructions that when executed on a processor configure the processor to perform one or more operations to: store a source page and a destination page; cause, at Pinned Memory Migration (PMM) logic, a write operation from an Input/Output (I/O) device to be observed for both the source page and the destination page; and cause performance of a transactional memory copy operation from the source page to the destination page.

Example 17 includes the one or more non-transitory computer-readable media of example 16, further comprising one or more instructions that when executed on the processor configure the processor to perform one or more operations to cause the PMM logic to cause replication of all write operations to the source page to the destination page to observe the write operation from the I/O device. Example 18 includes the one or more non-transitory computer-readable media of any one of examples 16 to 17, further comprising one or more instructions that when executed on the processor configure the processor to perform one or more operations to cause the PMM logic to cause: replication of all write operations to the source page to the destination page; and drainage of all in-flight write operations that have been queued for access to the one or more memory devices prior to commencement of the replication.

Example 19 includes the one or more non-transitory computer-readable media of any one of examples 16 to 18, further comprising one or more instructions that when executed on the processor configure the processor to perform one or more operations to cause the PMM logic to cause an update to a PMM range to enable replication of all write operations to the source page to the destination page. Example 20 includes the one or more non-transitory computer-readable media of any one of examples 16 to 19, further comprising one or more instructions that when executed on the processor configure the processor to perform one or more operations to cause the PMM logic to cause replication of all write operations to the source page to the destination page to observe the write operation from the I/O device, wherein any write operation to the destination page are to be ordered behind any write operation to the source page.

Example 21 includes a method comprising: storing a source page and a destination page in one or more memory devices; causing, at Pinned Memory Migration (PMM) logic, a write operation from an Input/Output (I/O) device to be observed for both the source page and the destination page; and causing performance of a transactional memory copy operation from the source page to the destination page. Example 22 includes the method of example 21, further comprising causing the PMM logic to cause replication of all write operations to the source page to the destination page to observe the write operation from the I/O device. Example 23 includes the method of any one of examples 21 to 22, further comprising causing the PMM logic to cause: replication of all write operations to the source page to the destination page; and drainage of all in-flight write operations that have been queued for access to the one or more memory devices prior to commencement of the replication. Example 24 includes the method of any one of examples 21 to 23, further comprising causing the PMM logic to cause an update to a PMM range to enable replication of all write operations to the source page to the destination page. Example 25 includes the method of any one of examples 21 to 24, further comprising causing the PMM logic to cause replication of all write operations to the source page to the destination page to observe the write operation from the I/O device, wherein any write operation to the destination page are to be ordered behind any write operation to the source page.

Example 26 includes an apparatus comprising means to perform a method as set forth in any preceding example. Example 27. Machine-readable storage including machine-readable instructions, when executed, to implement a method or realize an apparatus as set forth in any preceding example.

In various embodiments, one or more operations discussed with reference to Figs. 1 et seq. may be performed by one or more components (interchangeably referred to herein as "logic") discussed with reference to any of the figures.

In some embodiments, the operations discussed herein, e.g., with reference to Figs. 1 et seq., may be implemented as hardware (e.g., logic circuitry), software, firmware, or combinations thereof, which may be provided as a computer program product, e.g., including one or more tangible (e.g., non-transitory) machine-readable or computer-readable media having stored thereon instructions (or software procedures) used to program a computer to perform a process discussed herein. The machine-readable medium may include a storage device such as those discussed with respect to the figures.

Additionally, such computer-readable media may be downloaded as a computer program product, wherein the program may be transferred from a remote computer (e.g., a server) to a requesting computer (e.g., a client) by way of data signals provided in a carrier wave or other propagation medium via a communication link (e.g., a bus, a modem, or a network connection).

Reference in the specification to "one embodiment" or "an embodiment" means that a particular feature, structure, and/or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Thus, although embodiments have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus comprising:
one or more memory devices to store a source page and a destination page; and
logic circuitry to cause a write operation from an Input/Output (I/O) device to be observed for both the source page and the destination page,
wherein a transactional memory copy operation is to be performed from the source page to the destination page.

2. The apparatus of claim 1, wherein the logic circuitry is to cause replication of all write operations to the source page to the destination page to observe the write operation from the I/O device.

3. The apparatus of claim 1, wherein, to observe the write operation from the I/O device, the logic circuitry is to cause:
replication of all write operations to the source page to the destination page; and
drainage of all in-flight write operations that have been queued for access to the one or more memory devices prior to commencement of the replication.

4. The apparatus of claim 1, wherein, to observe the write operation from the I/O device, the logic circuitry is to cause an update to a Pinned Memory Migration (PMM) range to enable replication of all write operations to the source page to the destination page.

5. The apparatus of claim 1, wherein the write operation comprises a Direct Memory Access (DMA) write memory operation.

6. The apparatus of claim 1, wherein the logic circuitry is to cause replication of all write operations to the source page to the destination page to observe the write operation from the I/O device, wherein any write operation to the destination page is to be ordered behind any write operation to the source page.

7. The apparatus of claim 1, wherein the transactional memory copy operation is to be repeated in response to a determination that data in the source page has changed during the transactional memory copy operation.

8. The apparatus of claim 1, wherein the source page is to be unmapped for processor accesses, other than those accesses used for the transactional memory copy operation, prior to causing the performance of the transactional memory copy operation.

9. The apparatus of claim 1, wherein the source page is to be unmapped for accesses by a processor, other than those accesses used for the transactional memory copy operation, and invalidate the source page in all Translation Lookaside Buffers (TLBs) of the processor prior to causing the performance of the transactional memory copy operation.

10. The apparatus of claim 1, wherein a memory page table is to be updated to map future accesses by a processor to the destination page after performance of the transactional memory copy operation.

11. The apparatus of claim 1, wherein the logic circuitry is to communicate with the memory through a host I/O controller, or wherein the host I/O controller is coupled to the memory via a coherent fabric.

12. The apparatus of claim 1, wherein a System on Chip (SoC) comprises the one or more memory devices, the logic circuitry, and a processor having one or more processor cores.

13. The apparatus of claim 1, wherein the transactional memory copy operation is to be offloaded to an accelerator, or wherein the accelerator comprises a Data Streaming Accelerator (DSA).

14. An apparatus comprising means to perform an operation as set forth in any preceding claim.

15. Machine-readable storage including machine-readable instructions, when executed, to implement an operation or realize an apparatus as set forth in any preceding claims.
